# EUROPÄISCHE PATENTANMELDUNG

(11) **EP 0 866 091 A1**
(43) Veröffentlichungstag der Anmeldung: **23.09.1998**
(21) Anmeldenummer: 98103996.9
(22) Anmeldetag: 06.03.1998
(51) Int. Cl.: C08J 9/12

(54) **Gasmischungen zur Wärmedämmung**

(30) Priorität: 20.03.1997 DE 19711555
(71) Anmelder: BASF AKTIENGESELLSCHAFT, 67056 Ludwigshafen (DE)
(72) Erfinder: Rotermund, Udo, Dr., 01990 Ortrand (DE); Merten, Anne-Kathrin, 01979 Lauchhammer (DE); Krollmann, Norbert, Dr., 67281 Bissersheim (DE)

(57) **Zusammenfassung**

Gegenstand der Erfindung sind Gasmischungen zum Ausfüllen von Hohlräumen zur Wärmedämmung, enthaltend Cyclopentan und Argon.

## Beschreibung

Die Erfindung betrifft Gasmischungen mit geringer Wärmeleitfähigkeit, die zu Wärmedämmung verwendet werden können.

Gase haben eine wesentlich kleinere Wärmeleitfähigkeit als Flüssigkeiten oder Festkörper. Diese Eigenschaft der Gase wird seit sehr langer Zeit zur Wärmedämmung benutzt` wobei man insbesondere versucht, die Gaskonvektion als weiteren Mechanismus des Wärmetransports auszuschalten.
So ist z.B. die thermische Isolationswirkung von Federn und Daunen oder von Kork vor allem auf die niedrige Wärmeleitfähigkeit der Luft, deren Konvektion in diesen porösen Materialien praktisch nicht mehr stattfindet, zurückzuführen.
Auch der z.B. aus Physikbüchern, beispielsweise "Physik, Schwingungen und Wellen, Wärmelehre", VEB Verlag Technik Berlin 1961, von A. Recknagel, 4. Auflage, Seite 162 bekannte verminderte Wärmedurchgang durch doppelt oder mehrfach verglaste Fenster gegenüber einfach verglasten Fenstern beruht unter anderem auf der geringen Wärmeleitfähigkeit der Luft bei eingeschränkter Konvektion.
Es ist weiterhin bekannt, daß eine Reihe von Gasen eine wesentlich niedrigere Wärmeleitfähigkeit als Luft haben und deshalb zur Füllung von Hohlräumen zum Zwecke der Wärmedämmung besser als Luft geeignet sind.
Anstelle der Luft mit einer Wärmeleitfähigkeit von 26 mW/mK kann man so in bekannter Weise auch andere Gase geringerer Wärmeleitfähigkeit einsetzen, beispielsweise Argon mit 17 mW/mK oder CO₂ mit 16 mW/mK bei jeweils 25°C (Die im folgenden angegebenen Werte der Gaswärmeleitfähigkeit sind dem Buch "The Properties of Gases and Liquids" von Robert C. Reid, John M. Prausnitz und Thomas K. Sherwood. McGraw - Hill Book Company, Third Edition, 1977, Kapitel 10, Nomogramm Fig. 10-8, Tab. 10-4 und Tab. 10-5 entnommen). So kann man beispielsweise auch die Hohlräume doppelt oder mehrfach verglaster Fenster mit Argon oder CO₂ füllen und wird gegenüber Luft eine bessere Wärmedämmung haben. Will man keine klare Durchsicht sondern lediglich einen Milchglaseffekt, kann man auch den Hohlraum zwischen den Scheiben mit einem feinporigen durchscheinenden Material, z.B. einem Aerogel auf der Basis von Kieselsäure oder von organischen Stoffen füllen. Mit dieser Füllung wird man das Wärmedämmvermögen weiter verbessern. Unabhängig, ob der Hohlraum gefüllt oder nicht gefüllt ist, verbessert sich beim Wechsel von Luft als Füllgas zu einem Gas mit niedrigerer Wärmeleitfähigkeit die Wärmedämmung.

Hohlräume mit porösen Füllungen haben dabei gegenüber lediglich mit Gas gefüllten Hohlräumen den prinzipiellen Vorteil, daß sie auch den Transport der Wärme durch Strahlung stark beeinträchtigen, wobei die zusätzliche Erhöhung der Wärmeleitfähigkeit über das Festkörpermaterial des porösen Füllstoffes wesentlich kleiner als die Verminderung der Strahlungswärmeleitfähigkeit ist.
Ein wichtiger Spezialfall sind dabei die geschlossenzelligen Schaumstoffe, beispielsweise geschlossenzellige Polyurethan-Hartschaumstoffe oder geschlossenzellige Polystyrol - Schaumstoffe. Man setzt die Gase als Treibmittel ein, die dann in den geschlossenen Zellen verbleiben und ihre wärmeisolierende Wirkung ausüben. Man kann aber prinzipiell auch offenzellige Schaumstoffe nachträglich mit dem gewünschten Gas befüllen und den Schaumstoff mit einer gasundurchlässigen Hülle versehen. Bei den Schaumstoffen kommt es nicht mehr auf optische Transparenz sondern nur noch auf die Wärmedämmung an.
Es ist auch bekannt, den Hohlraum zu evakuieren, um einen Wärmetransport durch Wärmeleitung und Konvektion auszuschließen. In diesem Fall sind jedoch nach der Monographie "The Properties of Gases and Liquids" von Robert C. Reid, John M. Prausnitz und Thomas K. Sherwood, McGraw - Hill Book Company, Third Edition, 1977, Seite 499, relativ niedrige Drücke im KNUDSEN-Bereich unter 1 mbar erforderlich, um den beschriebenen Vakuumeffekt zu erreichen. Die Stützwirkung von Glasscheiben einer größeren Fläche ist dabei völlig unzureichend, um dem äußeren Atmosphärendruck standzuhalten, wenn der Hohlraum so stark evakuiert wird, so daß ein Einsatz für den Fensterbereich von vornherein ausscheidet. Eine poröse Füllung kann zwar diese Kräfte auffangen, beeinträchtigt aber die optische Transparenz. Das relativ starke Vakuum bedeutet zudem gegenüber einer einfachen Gasfüllung einen erheblich höheren Aufwand.
Auch das Evakuieren von offenzelligen Hartschaumstoffen und deren vakuumdichtes Versiegeln mit gasdichten Spezialfolien wird in letzter Zeit oft beschrieben (Vacuum - Isolations - Panel -VIP, z.B. in Proceedings of Polyurethanes EXPO '96, Las Vegas, Nevada, October 20 - 23, 1996, p. 35 - 42) - Es ist auch offensichtlich, daß der Aufwand der Vakuumtechnik unter 1 mbar dabei höher ist als das einfache Befüllen der offenzelligen Schaumstoffe mit Gasen oder Gasgemischen bei höheren Drücken, vorzugsweise bei Normaldruck.
Gegenüber Argon oder CO₂ sind bezüglich der Wärmedämmung beispielsweise die Fluorchlorkohlenwasserstoffe (FCKW) noch günstiger.
So hat beispielsweise das Trichlorfluormethan (das sogenannte R 11, das im folgenden stellvertretend für die FCKW genannt wird) nur eine Wärmeleitfähigkeit von 7,8 mW/mK.
Die FCKW haben jedoch ein sehr hohes Ozonschädigungspotential (ODP = Ozone Depletion Potential) von 100 % und tragen außerdem stark zum Treibhauseffekt (GWP = Global Warming Potential, für R 11 ebenfalls 100 %) bei. Der Einsatz wasserstoffhaltiger Fluorchlorkohlenstoffverbindungen (HFCKW) führt zu zwar erniedrigten aber auch nicht mehr tolerierbaren ODP und GWP-Werten. Aus diesem Grunde ist der Einsatz der FCKW in Deutschland seit 1994 verboten, und die Verwendung von HFCKW ist auch nur noch eine kurze Zeit erlaubt.
Chlorfreie wasserstoffhaltige Fluorkohlenstoffverbindungen (HFKW) haben zwar einen ODP-Wert von Null, aber immer noch einen beträchtlichen GWP-Wert. Außerdem sind diese Stoffe sehr teuer und können, einmal in die Atmosphäre gelangt, saure und umweltschädigende Zersetzungsprodukte, vor allem Fluorwasserstoff, liefern, ersichtlich z.B. aus den Proceedings of Polyurethanes EXPO '96. Las Vegas, Nevada, October 20 - 23, 1996, p. 394 - 403.
Auch die Verwendung von Schwefelhexafluorid als Gasfüllung führt zu niedrigen Wärmeleitfähigkeiten. Dieser Stoff hat jedoch auch einen sehr hohen GWP-Wert und wird damit bald nicht mehr zum Einsatz gelangen können.
Der Einsatz schwerer Edelgase wie Krypton oder Xenon mit sehr niedrigen Wärmeleitfähigkeiten würde zwar das Problem elegant lösen, führt aber zu unvertretbar hohen Kosten.
Der Einsatz neuer Gase zur Wärmeisolation mit ODP-Wert Null und vernachlässigbarem GWP Wert ist in letzter Zeit vor allem auf dem Gebiet der Polyurethan-Hartschaumstoffe vorangetrieben worden. Die Herstellung von Hartschaumstoffen auf Isocyanatbasis als Wärmeisolationsmaterial ist seit langem bekannt. Wichtigste chemische Ausgangsstoffe sind mehrfunktionelle Isocyanate. Als chemische Strukturen, die aus diesen Polyisocyanaten entstehen, können hier Polyurethane, Polyharnstoffe, Polyisocyanurate und auch weitere Isocyanataddukte wie Allophanate, Biurete, Carbodiimide und deren Isocyanataddukte, Oxazolidone, Polyimide, Polyamide u.a. vorliegen. Dabei wird die Art dieser Strukturen durch die Reaktionspartner der Isocyanate, die Katalyse und die Reaktionsbedingungen gesteuert. Man faßt diese Isocyanataddukte allgemein unter dem Begriff Polyurethane zusammen, da die Polyurethane von den Polyisocyanataddukten die wichtigste und häuf igste Stoffgruppe sind. Die Herstellung von derart definierten Polyurethanhartschaumstoffen wird beispielsweise im Kunststoff-Handbuch, Band VII, Polyurethane, herausgegeben von R. Vieweg und A. Höchtlen im Carl Hanser Verlag München 1966 und im Kunststoff-Handbuch, Band VII, Polyurethane, herausgegeben von G. Oertel im Hanser Verlag München, Wien 1993, beschrieben.
Das Problem der Umstellung von den FCKW löste man für viele Anwendungsgebiete der Polyurethan - Hartschaumstoffe durch den Einsatz von Kohlenwasserstoffen im Gemisch mit CO₂ oder CO₂ allein als Treibgase, die sich im Schaum als wärmeisolierenden Gase befinden. Von den Kohlenwasserstoffen sind die einfachen Pentane wegen ihrer verhältnismäßig niedrigen Gaswärmeleitfähigkeit, kombiniert mit einem noch ausreichend niedrigen Siedepunkt, gut geeignet. Als einfache Pentane sind hier n-Pentan, iso-Pentan und Cyclopentan zu verstehen. In den Veröffentlichungen von Heilig, G., Kunststoffe 81 (1991), S. 622 - 625 und Heilig, G. u.a., Kunststoffe 81 (1991), S. 790-794 wird auf das Blähen von Polyurethan-Hartschaumstoffen mit Pentan ausführlich eingegangen. Das Cyclopentan ist unter den einfachen Pentanen nach DE 3 933 335 bzw. EP 0 421 269 wegen seiner niedrigen Eigenwärmeleitfähigkeit favorisiert, führt aber immer noch zu einer höheren Wärmeleitfähigkeit gegenüber R 11-Schaumstoffen.
Das Cyclopentan hat bei 25°C einen Dampfdruck von nur ca. 400 mbar und muß deshalb mit einem zweiten Gas gemischt werden, um einen Gesamtdruck von 1 bar zu erreichen. Bei der Polyurethan-Hartschaumtechnik wird dazu CO₂ verwendet, das vor allem durch die Reaktion zwischen Wasser und Isocyanat entsteht.

Die Aufgabe der Erfindung besteht somit darin, halogenfreie Gasgemische mit einem ODP-Wert von Null zu finden, die, eingefüllt in Hohlräume wie z.B. in Zellen von offen- und geschlossenzelligen Schaumstoffen, in das Innere von Mehrfachverglasungen etc. zur einer gegenüber bisher bekannten Vorstellungen verbesserten Wärmedämmung führen.

Die Aufgabe konnte überraschenderweise gelöst werden durch Gasgemisch, die Cyclopentan und Argon enthalten.

Gegenstand des Erfindung sind demzufolge Gasgemische zur Wärmedämmung, dadurch gekennzeichnet, daß sie Cyclopentan und Argon enthalten.

Gegenstand der Erfindung sind weiterhin Hohlräume enthaltende Wärmedämmvorrichtungen, dadurch gekennzeichnet, daß sie Gasgemische, enthaltend Cyclopentan und Argon, enthalten.

Neben Cyclopentan und Argon können die erfindungsgemäßen Gasgemische noch weitere Gase enthalten

Beispiele hierzu sind Luft, Kohlendioxid, Kohlenwasserstoffdämpfe aus Methan, Ethan, Propan, n-Butan, iso-Butan, n-Pentan, iso-Pentan, Neopentan, Hexanen, Heptanen und Octanen, weiter Edelgase, Dämpfe aus Ameisensäuremethylester, Ameisensäureethylester, Aceton und Methylal, insbesondere Luft, Kohlendioxid und Kohlenwasserstoffdämpfe.

Insbesondere geeignet sind Gasgemische, die zu mindestens 40 Vol.-% aus Cyclopentan und Argon und höchstens 60 Vol.-% aus anderen Gasen bestehen.
Das Volumenverhältnis von Cyclopentan zu Argon beträgt dabei vorzugsweise 1:99 bis 95:5, besonders bevorzugt 10:90 bis 25:75, insbesondere 35:65 bis 65:35. In diesen Bereich tritt eine sehr starke Wärmedämmung auf, die sich mit den bekannten Vorstellungen zur Wärmedämmung nicht erklären läßt.

Eine besonders starke Dämmwirkung kann erzielt werden, wenn die erfindungsgemäßen Gasgemische in Schaumstoffe oder andere Hohlräume, z.B. Mehrfachverglasungen, in an sich bekannter Weise eingebracht werden. Das Einbringen der erfindungsgemäßen Gasgemische in die Hohlräume kann beispielsweise durch Evakuierung der Hohlräume und Brechung des Vakuums mittels der Gasgemische erfolgen. Anschließend werden die mit den Gasgemischen gefüllten Hohlräume gasdicht verschlossen, um ein Herausdiffundieren oder Gase zu verhindern. Bei Mehrfachverglasungen kann diese Abdichtung durch geeignete Dichtungsmasse erfolgen.

Bei porösen Feststoffen, wie insbesondere offenzellige Hartschaumstoffe, wird die Abdichtung insbesondere durch Umhüllung des Schaums durch Folien, beispielsweise solchen aus Kunststoffen, Metall, wie Aluminium, oder auch mehrlagigen Verbundfolien aus den genannten Materialien, durchgeführt.

Die gute Wärmedämmeigenschaft der erfindungsgemäßen Gasgemische sind überraschend und waren aus dem Stand der Technik nicht zu entnehmen.
In Gallardo, M. A. et al., Fluid Phase Eguilibria, (15 Oct. 1989) V. 50 (1 - 2) p. 223 - 233, wird die Löslichkeit unpolarer Gase in Cyclopentanon untersucht. Es können jedoch hieraus keine Schlüsse zur Wärmeleitfähigkeit von Gemischen aus Cyclopentan und Argon gezogen werden.

Die erfindungsgemäßen Gasgemische können auch als Zellgase in geschlossenzelligen Schaumstoffen, wie geschlossenzellige PU-Hartschäumen oder Polystyrolschaumstoffen, eingesetzt werden. Es ist auch möglich, natürliche Dammaterialien, wie Kork, Daunen oder Federn mit einer Atmosphäre aus der erfindungsgemäße Gasmischung zu versehen.

Die Erfindung soll an nachstehenden Beispielen näher erläutert werden.

### Beispiel 1 (Vergleich)

Ein offenzelliger Schaumstoff aus Melaminharz (BASOTECT® der Firma BASF Aktiengesellschaft, Ludwigshafen) mit einer Dichte von 12 kg/m³ und den Abmessungen 500 x 500 x 50 mm wurde in einer Polyamidfolie eingeschlossen und mit Luft bei 1 bar befüllt. Die Wärmeleitfähigkeit dieser Anordnung wurde mit einen Wärmestrommesser (Meßgerät nach DIN 52616) bei 40°C bestimmt.
Es wurde ein Wert von 38,7 mW/mK bestimmt.

### Beispiel 2 (Vergleich)

Es wurde verfahren wie in Beispiel 1, nur daß an Stelle von Luft Kohlendioxid verwendet wurde.
Es wurde eine Wärmeleitfähigkeit von 25,4 mW/mK bestimmt.

### Beispiel 3 (Vergleich)

Es wurde verfahren wie in Beispiel 1, nur daß an Stelle von Luft ein Gemisch aus 72,6 Vol.-% Kohlendioxid und 27,6 Vol.-% Cyclopentandampf eingesetzt wurde. Die Bestimmung der Gaskonzentrationen erfolgte mittels Gaschromatographie. Es wurde eine Wärmeleitfähigkeit von 24,0 mW/mK ermittelt.

Mit 59,2 % CO₂ und 40,7 % Cyclopentan wurde eine Wärmeleitfähigkeit von 23,1 mW/mK ermittelt.

### Beispiel 4 (Vergleich)

Es wurde verfahren wie in Beispiel 1, jedoch wurde an Stelle von Luft Argon verwendet.
Es wurde eine Wärmeleitfähigkeit von 26,4 mW/mK ermittelt.

### Beispiel 5

Es wurde verfahren wie in Beispiel 1, jedoch wurde an Stelle von Luft eine Mischung von 64,5 Vol.-% Argon und 37,3 Vol.-% Cyclopentandampf mit einem Gesamtdruck von 1 bar verwendet. Ws wurde eine Wärmeleitfähigkeit von 22,2 mW/mK ermittelt.

Obwohl mit reinem Argon gegenüber reinem Kohlendioxid eine schlechtere Wärmedämmung der Versucheinrichtung ermittelt wurde, verbessert sich in überraschender Weise bei einer Mischung von Argon mit Cyclopentan die Wärmedämmwirkung der Anordnung gegenüber einer vergleichbaren Mischung von Cyclopentan mit Kohlendioxid.

### Beispiel 6 (Vergleich)

Ein geschlossener Glaskasten aus gegen IR-Strahlung vergütetem Glas mit den Außenabmessungen 20 cm x 15 cm x 2 cm mit 2 verschließbaren Stutzen und einer Glaswandstärke von 5 mm wurde als Modell für eine Mehrfachverglasung mit Luft von 1 bar gefüllt. An der Anordnung wurde eine Wärmeleitfähigkeit bei 23°C von 64,0 mW/mK gemessen.

### Beispiel 7 (Vergleich)

Es wurde verfahren wie in Beispiel 6, jedoch wurde an Stelle von Luft Kohlendioxid verwendet. Es wurde eine Wärmeleitfähigkeit von 46 mW/mK ermittelt.

### Beispiel 8 (Vergleich)

Es wurde verfahren wie in Beispiel 6, jedoch wurde an Stelle von Luft Argon verwendet. Es wurde eine Wärmeleitfähigkeit von 49,6 mW/mK ermittelt.

### Beispiel 9 (Vergleich)

Es wurde verfahren wie in Beispiel 6, jedoch wurde an Stelle von Luft ein Gemisch aus 37,9 % Cyclopentandampf und 62,1 % Kohlendioxid verwendet. Es wurde eine Wärmeleitfähigkeit von 41,4 mW/mK ermittelt.

### Beispiel 10

Es wurde verfahren wie in Beispiel 6, jedoch wurde an Stelle von Luft ein Gemisch aus 38 % Cyclopentandampf und 61,8 % Argon verwendet. Die ermittelte Wärmeleitfähigkeit von 37,8 mW/mK war deutlich niedriger als erwartet.

### Beispiel 11

Ein gechlossener Glaskasten mit den Abmessungen 20 x 15 x 1,67 cm mit 2 verschließbaren Stutzen, einer Glaswandstärke von 3 mm und einer Gesamtdicke der Glasdoppelwand von 16,7 mm führte bei einer Mitteltemperatur von 40°C und nicht gegen IR-Strahlung vergütetem Glas zu folgenden Werten:

| | | |
|---|---|---|
| a) | Füllung mit Luft (Vergleich) | 113 mW/mK |
| b) | Füllung mit Argon (Vergleich) | 100 mW/mK |
| c) | Füllung mit Kohlendioxid (Vergleich) | 98 mW/mK |
| d) | Füllung mit Cyclopentan und Kohlendioxid im Volumenverhältnis 38 zu 62 (Vergleich) | 91,5 mW/mK |
| e) | Füllung mit Cyclopentan und Argon im Volumenverhältnis 38 zu 62 (erfindungsgemäß) | 87,5 mW/mK |

### Beispiel 12 (Vergleich)

Ein Polyurethan - Hartschaumstoff wurde aus folgenden Bestandteilen hergestellt:

### Komponente A (Polyolkomponente)

| | |
|---|---|
| Polyol aus Sorbit, Wasser und Propylenoxid, Hydroxylzahl 340 mg KOH/g | 32,6 Masse-Teile |
| Polyethylenglykol, Hydroxylzahl 190 mg KOH/g | 10,6 Masse-Teile |
| Polyesterol aus Dimerfettsäure, Hydroxylzahl 400 mg KOH/g | 13,1 Masse-Teile |
| Flammschutzmittelgemisch, Basis Phosphor, Chlor | 30,5 Masse-Teile |
| Stabilisatorgemisch | 1,72 Masse-Teile |
| Wasser | 1,21 Masse-Teile |
| Kaliumacetat | 1,22 Masse-Teile |
| Amin-Katalysator-Gemisch | 1,05 Masse-Teile |
| Cyclopentan als Treibmittel | 8,0 Masse-Teile |
| Summe | 100,00 Masse-Teile |

### Komponente B

| | |
|---|---|
| Polyisocyanat | 200,0 Masse-Teile |

Komponente A wurde mit Komponente B in bekannter Weise mittels eines Hochdruck - Mischkopfes vermischt und in ein auf 45°C temperiertes Formwerkzeug der Abmessungen 2000 mm x 200 mm x 50 mm eingetragen. Die formgeschäumte Rohdichte betrug 50 kg/m³.
Auf Grund der Herstellungsweise befanden sich im Zellgas vor allem Cyclopentan und CO₂, die Polymerstruktur bestand neben Polyurethan- auch aus Polyisocyanurat-Elementen.
Die unmittelbar nach dem Verschäumen (1 Tag Lagerung) gemessene Wärmeleitfähigkeit betrug 20,2 mW/mK.

### Beispiel 13

Die Herstellung des Hartschaumstoffes erfolgte wie in Beispiel 11 beschrieben. Die Beladung der A-Komponente erfolgte zusätzlich mit Argon durch eine Gasbeladungseinheit bei 15 bar entsprechend etwa 12 Vol% Argon im Schaum. Die unmittelbar nach dem Verschäumen (1 Tag Lagerung) gemessene Wärmeleitfähigkeit betrug 19,5 mW/mK. Im vorliegenden Schaum befanden sich vor allem Cyclopentan, Kohlendioxid und Argon im Zellgas.

## Patentansprüche

1. Gasmischung zum Ausfüllen von Hohlräumen zur Wärmedämmung, enthaltend Cyclopentan und Argon.

2. Gasmischung nach Anspruch 1, dadurch gekennzeichnet, daß sie 1 Vol-% Cyclopentan in 99 Vol-% Argon bis 5 Vol-% Argon in 95 Vol-% Cyclopentan enthalten.

3. Gasmischung nach Anspruch 1 oder 2, dadurch gekennzeichnet, daß sie 10 Vol-% Cyclopentan in 90 Vol-% Argon bis 75 Vol-% Cyclopentan in 25 Vol-% Argon enthalten.

4. Gasmischung nach einem der Ansprüche 1 bis 3, dadurch gekennzeichnet, daß sie 35 Vol-% Cyclopentan in 65 Vol-% Argon bis zur 65 Vol-% Cyclopentan in 35 Vol-% Argon enthalten.

5. Gasmischung nach einem der Ansprüche 1 bis 4, dadurch gekennzeichnet, daß sie in einem Volumenanteil von größer 40 % mit einem Volumenanteil kleiner 60 % anderer Gase vorliegt.

6. Gasmischung nach einem der Ansprüche 1 bis 5, dadurch gekennzeichnet, daß als andere Gase Kohlendioxid, Luft, Kohlenwasserstoffe mit 1 bis 8 Kohlenstoffatome, Edelgase, Ameisensäuremethylester, Ameisensäureethylester, Aceton oder Methylal verwendet werden.

7. Gasmischung nach einem der Ansprüche 1 bis 6, dadurch gekennzeichnet, daß als andere Gase Luft, Kohlendioxid oder Kohlenwasserstoffe mit 1 bis 8 Kohlenstoffatomen eingesetzt werden.

8. Gasmischung nach einem der Ansprüche 1 bis 7, dadurch gekennzeichnet, daß ihr Gesamtdruck 100 bis 2000 mbar beträgt.

9. Gasmischung nach einem der Ansprüche 1 bis 8, dadurch gekennzeichnet, daß ihr Gesamtdruck 800 bis 1200 mbar beträgt.

10. Offenzellige Schaumstoffe mit einer gasdichten Umhüllung, dadurch gekennzeichnet, daß sie mit einer Gasmischung nach einem der Ansprüche 1 bis 9 gefüllt sind.

11. Geschlossenzellige Schaumstoffe, dadurch gekennzeichnet, daß sie als Zellgas eine Gasmischung nach einen der Ansprüche 1 bis 9 enthalten.
